# EUROPÄISCHE PATENTSCHRIFT

(11) **EP 3 688 533 B1**
(45) Veröffentlichungstag und Bekanntmachung des Hinweises auf die Patenterteilung: **27.04.2022**
(21) Anmeldenummer: 19725307.3
(22) Anmeldetag: 14.05.2019
(51) Int. Cl.: G05B 19/042, H04L 29/12

(54) **VERFAHREN UND VORRICHTUNG ZUR AUTOADRESSIERUNG MIT POSITIONSBESTIMMUNG VON BUSTEILNEHMERN**
METHOD AND DEVICE FOR AUTO-ADDRESSING WITH POSITION DETERMINATION OF BUS SUBSCRIBERS
PROCÉDÉ ET SYSTÈME POUR L`ADRESSAGE AUTOMATIQUE AVEC DÉTERMINATION DE POSITION D'ABONNÉS DE BUS

(30) Priorität: 29.05.2018 DE 102018112873
(43) Veröffentlichungstag der Anmeldung: 05.08.2020
(73) Patentinhaber: ebm-papst Mulfingen GmbH & Co. KG, 74673 Mulfingen (DE)
(72) Erfinder: SAUER, Thomas, 97980 Bad Mergentheim (DE)
(74) Vertreter: Staeger & Sperling Partnerschaftsgesellschaft mbB
(86) Internationale Anmeldenummer: PCT/EP2019/062385
(87) Internationale Veröffentlichungsnummer: WO 2019/228793

(56) Entgegenhaltungen:
- WO-A1-2015/062731
- US-A1- 2002 161 456

## Beschreibung

### Gebiet der Erfindung

Die Erfindung betrifft ein Verfahren zur exakten Positionsbestimmung von einzelnen Busteilnehmern bzw. Slave-Einheiten in einer Anlage umfassend mehrere solcher Teilnehmer bzw. Einheiten, die insbesondere nebeneinander in gemeinsamen oder getrennten Funktionsbereichen eingesetzt sind.

Das der vorliegenden Erfindung zugrunde liegende Problem lässt sich anhand dem nachfolgend erläuterten Beispiel darstellen. Eine Kühltheke im Supermarkt besteht typischerweise aus mehreren Kühlsegmenten, deren Anzahl von der Länge der Kühltheke oder Kühltruhe abhängt. In jedem Segment befindet sich typischerweise ein Temperatursensor zur Überwachung der Temperatur in diesem Kühlsegment, z.B. für die gesetzlich vorgeschrieben Protokollierung der Kühltemperatur oder auch zur Steuerung der Kühlleistung in diesem Segment.

Die Ventilatoren in den jeweiligen Kühlsegmenten besitzen im Auslieferungszustand alle die Adresse "1" und müssen jeweils gesondert adressiert werden, um später im Betrieb individuell angesprochen werden zu können. Um nun die Ventilatoren jeweils einzeln adressieren zu können, kann auf einen bekannten Autoadressierungsalgorithmus zurückgegriffen werden.

Es gibt im Stand der Technik diverse Verfahren der Adressvergabe in einem Netzwerk, wie z. B. die manuelle IP-Adressvergabe bei Netzwerkgeräten (Computer, Drucker, etc.), die Seriennummer basierte Autoadressierung, eine Adressvergabe nach einem bestimmten Kabelplan oder eine Schieberegisteradressvergabe. Einen automatisierten Adressiervorgang schlägt z. B. die DE 103 36 301 A1 vor. Aus der EP 2 287 689 EP ist ein Bus-basierendes Adressierverfahren von Slave-Einheiten bekannt.

Ferner sind im Stand der Technik Verfahren bekannt, bei der die Adressvergabe der betroffenen Einheit (Slave-Einheit) basierend auf der Seriennummer der Einheit erfolgt. Ferner sind im Stand der Technik entsprechende Algorithmen bekannt, um die Seriennummer-bezogene Adressvergabe in einfacher Weise zu realisieren. Nach Abschluss des Adressvergabeprozesses können die Ventilatoren einzeln und individuell von einer Steuerung angesprochen werden.

Allerdings besteht das Problem, dass damit nicht klar ist, welche Slave-Einheit (hier Ventilator) an welcher Position angeordnet ist. Im vorliegenden Beispiel bedeutet dies, dass auch bei Kenntnis der Adresse der Ventilatoren unklar bleibt, an welcher exakten Position in der Kühlanlage d. h. in welchem Kühlsegment sich der entsprechende Ventilator befindet. Diese Problematik stellt sich auch in anderen Applikationen, bei denen eine Mehrzahl an Ventilatoren oder Slave-Einheiten angesprochen werden müssen.

Weiterer druckschriftlicher Stand der Technik im vorliegenden technischen Gebiet, welcher den Oberbegriff des Anspruchs 1 widerspiegelt, ist in den Dokumenten US 2002/161 456 A1 und WO 2015/062 731 A1 offenbart.

Vor diesem Hintergrund ist es Aufgabe der vorliegenden Erfindung, vorbesagte Nachteile zu überwinden und ein Verfahren bereitzustellen, um die Position von mehreren Slave-Einheiten in einem Anlagenbereich auf einfache, kostengünstige und zuverlässige Weise ermitteln zu können.

Diese Aufgabe wird gelöst mit einem Verfahren mit den Merkmalen von Anspruch 1 sowie mit einer Vorrichtung mit den Merkmalen von Anspruch 11.

Ein Grundgedanke der vorliegenden Erfindung besteht darin, die Position der betreffenden Slave-Einheit durch die mit der Slave-Einheit verbundene technische Wirkung mittels indirekter Informationsgewinnung zu bestimmen. Wenn insofern, wie im vorliegenden Beispiel, die Aufgabe der Slave-Einheit in der Kühlfunktion oder einer die Kühlfunktion unterstützenden Funktion liegt, so lässt sich mithilfe einer Sensorik, die die Wirkung der zu erzielenden Funktion ermittelt und deren Einbauort bekannt ist, mittels dieser sekundären Information ein Rückschluss auf die genauer Position der Slave-Einheit erzielen.

Mittels iterativem Vorgehen kann dann, beginnend von der ersten Slave-Einheit aufeinanderfolgend die jeweilige Position aller weiteren Slave-Einheiten bestimmt werden. Die Position eines Ventilators in einem bestimmten Kühlsegment des Kühlsystems kann somit dadurch bestimmt werden, dass zunächst nur der Ventilator und der Kühlkreislauf mit der ersten Adresse betrieben wird und alle anderen Ventilatoren außer Funktion bleiben. In diesem Fall wird nur der im entsprechenden Segment angeordnete Sensor (zum Beispiel ein Temperaturfühler) eine deutlich stärkere Temperaturänderung erfassen, im Vergleich zu den Sensoren in den anderen Kühlsegmenten. Werden die jeweils verbauten Sensoren den einzelnen Kühlsegmenten fest zugeordnet, lässt sich aus dem Änderungsverhalten (Gradienten) der Messkurve der jeweiligen Messgröße auf die Position des zugeordneten Ventilators schließen. Dieser Positionserfassungsvorgang wird für die weiteren vorhandenen Adressen bzw. Ventilatoren (allgemein Slave-Einheiten) schrittweise vorgenommen, bis die Positionen aller Slave-Einheiten feststehen.

Alternativ können auch komplexere Algorithmen eingesetzt werden, die zum Beispiel mehrere Ventilatoren auf einmal betreiben und über z. B. DOE eine minimale Anzahl an Versuchen benötigen, um alle Positionen eindeutig zu bestimmen.

Die für die Positionserfassung bestimmte indirekte Größe kann dabei über einen Sensor oder auch das gesamte Systemverhalten bestimmt werden, beispielsweise kann das Vorhandensein von bewegter Luft benutzt werden, oder auch die Abschaltung eines Kompressionskältesubsystems, welches aufgrund eines nicht angesteuerten Ventilators am Verflüssiger oder Verdampfer eine Systemstörung erfährt.

Erfindungsgemäß wird hierzu ein Verfahren zur Positionserfassung des Einbauortes von Slave-Einheiten in einem Betriebsbereich einer Anlage umfassend eine Anzahl i an benachbarten Betriebsbereichen jeweils aufweisend eine Slave-Einheit vorgeschlagen, wobei jeder Betriebsbereich im Betrieb der Anlage jeweils einen vorbestimmten physikalischen Zustand aufweisen soll, wozu die einzelnen Slave-Einheiten eine Betriebsfunktion zum Erzielen oder Verändern des physikalischen Zustands in dem betreffenden Betriebsbereich der Anlage aufweisen oder zu diesem Zweck bereitstellen und wobei im betreffenden Betriebsbereich jeweils ein Sensor vorgesehen ist, um eine dem physikalischen Zustand proportionale Messgröße zu erfassen, mit den folgenden Schritten:
a. Vergabe oder Ermitteln der Netzwerkadresse wenigstens einer Slave-Einheit mittels eines Autoadressierungsverfahrens (vorzugsweise eines Seriennummerbezogenen Adressierverfahrens);
b. Aktivieren oder Verändern der Betriebsfunktion jeweils dieser Slave-Einheit zum Erzielen oder Verändern des physikalischen Zustands in dem betreffenden Betriebsbereich;
c. Erfassen einer detektierbaren physikalischen Zustandsänderung in dem oder den Betriebsbereichen durch Messen der jeweiligen Messgrößen, die dem jeweiligen Zustand korrespondiert und zwar in Abhängigkeit der Zeit mittels der Sensoren;
d. Zuordnen des erfassten Einbauortes aus einer Anzahl vorhandener Einbauorte aus der oder den Messgrößen insbesondere aus derjenigen Messgröße mit der größten gemessenen Änderung zu der Netzwerkadresse der aktivierten Slave-Einheit.

In einer vorteilhaften Ausführungsform der Erfindung ist vorgesehen, dass die zuvor genannten Schritte a) bis d) sukzessive wiederholt werden, bis alle Einbauorte und damit Betriebsbereiche der Slave-Einheiten den jeweiligen Netzwerkadressen dieser Slave-Einheiten zugeordnet sind.

Es ist weiter von Vorteil, wenn bei der sukzessiven Vergabe der Netzwerkadressen die Netzwerkadressvergabe der jeweils nächsten Slave-Einheit um jeweils den Faktor "1" erhöht wird, vorzugsweise beginnend mit N1=1 bis Ni=i.

Es ist weiter mit Vorteil vorgesehen, wenn eine Identifikation jeder Slave-Einheit ferner über eine Datenzuordnungstabelle enthaltend die individuelle Seriennummer jeder Slave-Einheit und die dieser Seriennummer zugewiesene Netzwerkadresse erfolgt. Sofern in Schritt a) eine Netzwerkadresse nicht vorhanden ist, kann mittels eines Adressierverfahrens entsprechend einer gespeicherten Tupel eine Adressierung erfolgen, so dass die betreffende Slave-Einheit eine eindeutige Adresse erhält.

Je nach Applikation können die Slave-Einheiten zum Beispiel Ventilatoren, vorzugsweise Ventilatoren mit regelbarer Drehzahl sein.

Es kann weiter mit Vorteil vorgesehen sein, dass vor dem zuvor genannten Schritt b) zunächst alle Slave-Einheiten aktiviert werden, um einen bestimmten physikalischen Zustand in den Betriebsbereichen der Anlage zu erzielen, insbesondere einen Zustand in einem thermodynamischen Gleichgewicht. Am Beispiel einer Kühlanlage mit unterschiedlichen Kühlbereichen als Betriebsbereiche wird hierzu die Kühlanlage in Betrieb genommen und die Ventilatoren alle mit gleicher Drehzahl betrieben, um die gewünschte Temperatur in den einzelnen Kühlbereichen einzustellen.

In einem weiteren Schritt ist erfindungsgemäß vorgesehen, dass nach Erreichen eines bestimmten Zustandes oder des thermodynamischen Gleichgewichts die jeweiligen von den Sensoren erfassten Messgrößen (zum Beispiel die Temperaturen in den unterschiedlichen Kühlbereichen) in einem Speicher gespeichert werden.

In einer möglichen Ausführungsform der Erfindung ist vorgesehen, dass vor dem Schritt b) nach Erreichen eines bestimmten Zustandes oder des thermodynamischen Gleichgewichts in den mehreren Betriebsbereichen (zum Beispiel Kühlbereichen) der Anlage die Betriebsfunktion derjenigen Slave-Einheit (z. B. die Drehzahl des betreffenden Ventilators) deren Einbauort bestimmt werden soll, wieder deaktiviert oder verändert wird.

In einer alternativen Ausführungsform der Erfindung ist vorgesehen, dass vor dem Schritt b) nach Erreichen eines bestimmten physikalischen Zustandes oder des thermodynamischen Gleichgewichts in den jeweiligen Betriebsbereichen der Anlage alle Slave-Einheiten (zum Beispiel alle Ventilatoren) bis auf diejenige Slave-Einheit (derjenige Ventilator) deren Einbauort ermittelt werden soll, wieder deaktiviert werden. Da es eine bekannte Anzahl an vorhandenen Einbauorten gibt, an denen sich die Ventilatoren bzw. Slave-Einheiten befinden können, kann man für jeden Einbauort auch repräsentativ eine den Einbauort repräsentierende Positionsnummer oder Positionsinformation verwenden, wie z. B. POS1, Pos2, ... Posi.

Mit Vorteil ist vorgesehen, dass die Messgröße zum Erfassen des physikalischen, insbesondere thermischen Zustands in dem betreffenden Betriebsbereich der Anlage die Temperatur ist und die Sensoren entsprechend zur Erfassung der Temperatur ausgebildet sind.

Ein weiterer Aspekt der vorliegenden Erfindung betrifft eine Positionserfassungsvorrichtung zur Erfassung des Einbauortes von Slave-Einheiten in einem Betriebsbereich einer Anlage, umfassend eine Anzahl i an benachbarten Betriebsbereichen jeweils aufweisend eine Slave-Einheit, wobei die einzelnen Slave-Einheiten veränderbare Betriebsfunktion zum Erzielen oder Verändern des physikalischen Zustands in dem betreffenden Betriebsbereich der Anlage aufweisen und wobei im betreffenden Betriebsbereich jeweils ein Sensor vorgesehen ist, um eine dem physikalischen Zustand in dem betreffenden Betriebsbereich proportionale Messgröße zu erfassen und eine Auswerteeinrichtung vorgesehen ist, um eine Netzwerkadresse (Ni) einer Slave-Einheit (SE1, ..., SEi) mittels eines Autoadressierungsverfahrens zu vergeben oder zu ermitteln, beim Aktivieren oder Verändern der Betriebsfunktion wenigstens einer Slave-Einheit aus der zeitlichen Änderung der Messgrößen den Einbauortes dieser Slave-Einheit zu ermitteln und zu der Netzwerkadresse (Ni) der entsprechenden Slave-Einheit den Einbauort (F1, ..., Fi) in dem Betriebsbereich (A1, ..., Ai) mit der größten gemessenen Änderung der Messgröße (T) zuzuordnen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine schematische Darstellung einer erfindungsgemäßen Positionserfassungsvorrichtung und
- Fig. 2: eine schematische Darstellung eines Flussdiagramms zur Erläuterung des erfindungsgemäßen Positionserfassungsverfahrens.

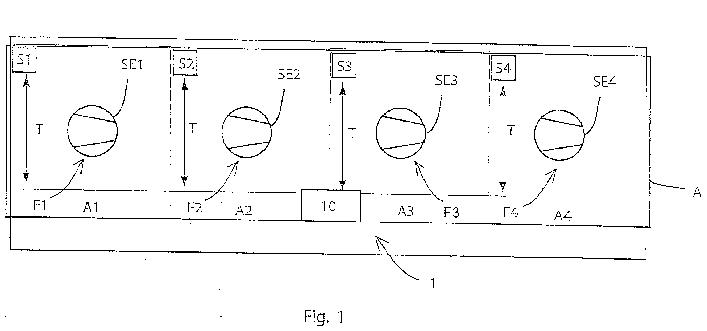

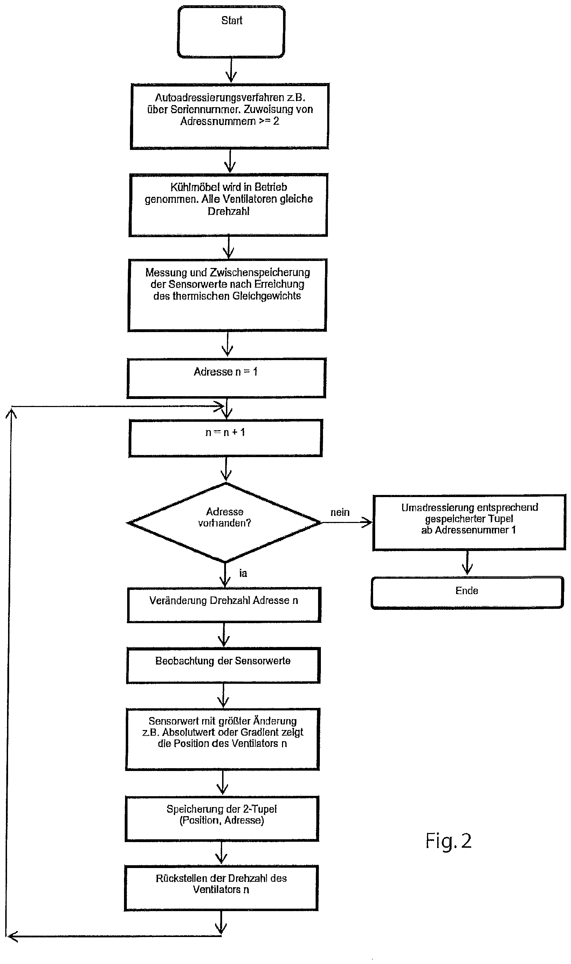

Im Folgenden wird die Erfindung anhand beispielhafter Ausführungsformen mit Bezug auf die Figuren 1 und 2 näher erläutert, wobei gleiche Bezugszeichen in den Figuren auf gleiche funktionale und/oder strukturelle Merkmale hinweisen.

In der Figur 1 ist hierzu eine schematische Darstellung einer erfindungsgemäßen Positionserfassungsvorrichtung 1 in einer Kühlanlage A gezeigt. Die Anlage A umfasst eine Anzahl i = 4 benachbarte Betriebsbereichen A1, ..., A4 nämlich die sogenannten Kühlsegmente. In jedem Kühlsegment A1, ..., A4 befindet sich eine Slave-Einheit SE1, ..., SE4 an ihrem Einbauort F1, ..., F4. Die Slave-Einheiten sind in dem vorliegenden Ausführungsbeispiel Ventilatoren mit einstellbarer Drehzahl.

Jeder Betriebsbereich A1, ..., A4 soll bestimmungsgemäß im ungestörten Betrieb der Kühlanlage A jeweils einen vorbestimmten physikalischen Zustand, nämlich eine bestimmte Betriebstemperatur aufweisen. Zum Regeln der Betriebstemperatur in den einzelnen Betriebsbereichen A1, ..., A4 dienen die Ventilatoren. Eine Betriebsfunktion der Ventilatoren ist ihr Lüftungsbetrieb, der von der Drehzahl abhängig stärker oder schwächer wirkt.

Mittels dieser Betriebsfunktion lässt sich der physikalische Zustand und zwar das Maß der thermischen Energie (analog der Temperatur) in dem betreffenden Betriebsbereich der Anlage Regeln, wobei im betreffenden Betriebsbereich A1, ..., A4 jeweils ein Temperatursensor S1, ..., S4 vorgesehen ist. Jeder dieser Sensoren S1, ..., S4 ist demnach einem ganz bestimmten Betriebsbereich A1, ..., A4 zugeordnet. Mit jedem Temperatursensor ist es möglich, eine dem physikalischen Zustand in diesem Betriebsbereich d. h. in diesem Kühlsegment proportionale Messgröße (nämlich die Temperatur T) zu erfassen. Ferner umfasst die Positionserfassungsvorrichtung 1 eine Auswerteeinrichtung 10, um beim Aktivieren oder Verändern der Betriebsfunktion, sprich der Drehzahl wenigstens eines Ventilators aus der zeitlichen Änderung der Temperatur den Einbauortes dieser Slave-Einheit d. h. dieses Ventilators zu ermitteln. Mit der dargestellten Vorrichtung kann selbstverständlich bei geeigneter Auslegung der Auswerte Einrichtung auch aus den Gradienten mehrerer Temperaturveränderungen infolge der Drehzahländerung mehrerer Ventilatoren ebenfalls ein Rückschluss auf den Einbauort eines derjenigen Ventilatoren geschlossen werden, dessen Drehzahländerung angesteuert wurde.

In der Fig. 2 ist ein Flussdiagramm zur Erläuterung des erfindungsgemäßen Positionserfassungsverfahrens dargestellt. Zu Beginn des Verfahrens erfolgt ein Auto Adressierungsverfahren zum Adressieren der Ventilatoren. Im Anschluss wird die Kühlanlage A (wie in Figur 1 gezeigt) in Betrieb genommen in dem die 4 Ventilatoren aktiviert und mit einer bestimmten Drehzahl betrieben werden.

In einem nachfolgenden Schritt erfolgt die Messung und zwischen Speicherung der mittels der Sensoren erfassten Sensorwerten d. h. Messwerte insbesondere nach Erreichen des thermodynamischen Gleichgewicht. Nun erfolgt das Adressierungsverfahren. Sofern eine Adresse eines angesprochenen Ventilators vorhanden ist, erfolgt die Veränderung dessen Drehzahl. Im Anschluss wird mittels der Auswerte-Einrichtung 10 die Änderung der Messwerte, sprich Sensorwerte erfasst. Ferner wird mittels der Auswerte-Einrichtung 10 derjenige Sensor S1,..., S4 mit der größten Änderung (entweder im Absolutwert oder im Gradienten) ermittelt. Da, wie zuvor erläutert, jedem Sensor S1,..., S4 konkret ein Kühlsegment A1, ..., A4 zugeordnet ist lässt sich somit der Einbauort F1, ..., F4 konkret über die Änderung der Messdaten indirekt erfassen. Das Ergebnis kann zum Beispiel in einer Zuordnungstabelle gespeichert werden sodass eine klare Zuordnung zwischen der Position und der Adresse jedes Ventilators erhalten wird. Nachdem für den besagten Ventilator gemäß dem beschriebenen Verfahren dessen Position bestimmt wurde, wird dessen Drehzahl wieder zurückgesetzt. Wie mit dem rekursiven Pfeil der Figur 2 angedeutet, werden diese Schritte so lange wiederholt, bis der Einbauort aller Ventilatoren (im vorliegenden Ausführungsbeispiel der 4 Ventilatoren) bestimmt ist.

Wird der Einbauort in der Anlage A durch eine Positionsinformation Pos1, Pos2,..:, Posi repräsentiert, so wird am Ende eine Information erzielt, die jedem Ventilator SEi der i Ventilatoren eine Position Posi zuweist wie z. B. SE1 an Pos3, SE2 an Pos7, usw.

## Patentansprüche

1. Verfahren zur Positionserfassung eines jeweiligen Einbauortes (F1, ..., Fi) von Slave-Einheiten (SE1, ..., SEi) in einem jeweiligen Betriebsbereich (A1, ..., Ai) einer Anlage (A) umfassend eine Anzahl i an benachbarten Betriebsbereichen (A1, ..., Ai) jeweils aufweisend eine Slave-Einheit (SE1, ..., SEi), wobei jeder Betriebsbereich (A1, ..., Ai) im Betrieb der Anlage (A) jeweils einen vorbestimmten physikalischen Zustand aufweisen soll, wozu die einzelnen Slave-Einheiten (SE1, ..., SEi) eine Betriebsfunktion zum Erzielen oder Verändern des physikalischen Zustands in dem betreffenden Betriebsbereich (A1, ..., Ai) der Anlage (A) aufweisen und wobei im betreffenden Betriebsbereich (A1, ..., Ai) jeweils ein Sensor (S1, ..., Si), um eine dem physikalischen Zustand proportionale Messgröße (T) zu erfassen, und eine Auswerteeinrichtung vorgesehen ist, mit den folgenden Schritten:
a. Vergabe oder Ermitteln einer Netzwerkadresse (Ni) einer Slave-Einheit (SE1, ..., SEi) mittels eines Autoadressierungsverfahrens durch die Auswerteeinrichtung;
b. Aktivieren oder Verändern der Betriebsfunktion jeweils dieser Slave-Einheit zum Erzielen oder Verändern des physikalischen Zustands in dem betreffenden Betriebsbereich (A1, ..., Ai);
c. Erfassen einer detektierbaren Zustandsänderung in den Betriebsbereichen (A1, ..., Ai) durch Messen der jeweiligen Messgrößen (T) in Abhängigkeit der Zeit mittels der Sensoren (S1, ..., Si);
d. Zuordnen des Einbauortes (F1, ..., Fi) in dem Betriebsbereich (A1, ..., Ai) mit der größten gemessenen Änderung der Messgröße (T) zu der Netzwerkadresse (Ni) der entsprechenden Slave-Einheit mittels der Auswerteeinrichtung.

2. Verfahren nach Anspruch 1, **dadurch gekennzeichnet, dass** die Schritte a) bis d) sukzessive wiederholt werden, bis alle Einbauorte (F1, ..., Fi) und damit Betriebsbereiche (A1, ..., Ai) der Slave-Einheiten (SE1, ..., SEi) den jeweiligen Netzwerkadressen (Ni) dieser Slave-Einheiten (SE1, ..., SEi) zugeordnet sind.

3. Verfahren nach Anspruch 2, **dadurch gekennzeichnet, dass** bei der sukzessiven Vergabe der Netzwerkadressen (Ni) die Netzwerkadressvergabe der jeweils nächsten Slave-Einheit (SE1, ..., SEi) um jeweils den Faktor "1" erhöht wird, vorzugsweise beginnend mit N1=1 bis Ni=i.

4. Verfahren nach einem der Ansprüche 1 bis 3, **dadurch gekennzeichnet, dass** die Slave-Einheiten (SE1, ..., SEi) Ventilatoren, vorzugsweise Ventilatoren mit regelbarer Drehzahl sind.

5. Verfahren nach einem der Ansprüche 1 bis 4, **dadurch gekennzeichnet, dass** vor dem Schritt b) zunächst alle Slave-Einheiten (SE1, ..., SEi) aktiviert werden, um einen bestimmten physikalischen Zustand in den Betriebsbereichen (A1, ..., Ai) der Anlage (A) zu erzielen, insbesondere einen Zustand in einem thermodynamischen Gleichgewicht.

6. Verfahren nach Anspruch 5, **dadurch gekennzeichnet, dass** nach Erreichen eines bestimmten Zustandes oder des thermodynamischen Gleichgewichts die jeweiligen von den Sensoren (S1, ..., Si) erfassten Messgrößen (T) in einem Speicher gespeichert werden.

7. Verfahren nach Anspruch 5 oder 6, **dadurch gekennzeichnet, dass** vor dem Schritt b) nach Erreichen eines bestimmten Zustandes oder des thermodynamischen Gleichgewichts in den Betriebsbereichen (A1, ..., Ai) der Anlage (A) die Betriebsfunktion derjenigen Slave-Einheit deren Einbauort bestimmt werden soll, wieder deaktiviert oder verändert wird.

8. Verfahren nach Anspruch 5 oder 6, **dadurch gekennzeichnet, dass** vor dem Schritt b) nach Erreichen eines bestimmten Zustandes oder des thermodynamischen Gleichgewichts in den Betriebsbereichen (A1, ..., Ai) der Anlage (A) alle Slave-Einheiten (SE1, ..., SEi) bis auf diejenige Slave-Einheit deren Einbauort bestimmt werden soll, wieder deaktiviert werden.

9. Verfahren nach einem der Ansprüche 1 bis 8, **dadurch gekennzeichnet, dass** die Messgröße (T) zum Erfassen des physikalischen, insbesondere thermischen Zustands in dem betreffenden Betriebsbereich (A1, ..., Ai) der Anlage die Temperatur ist.

10. Verfahren nach einem der vorhergehenden Ansprüche, **dadurch gekennzeichnet, dass** eine Identifikation jeder Slave-Einheit (SE1, ..., SEi) über eine Datenzuordnungstabelle enthaltend die individuelle Seriennummer jeder Slave-Einheit (SE1, ..., SEi) und die dieser Seriennummer zugewiesene Netzwerkadresse (Ai) erfolgt.

11. Positionserfassungsvorrichtung zur Erfassung eines jeweiligen Einbauortes (F1, ..., Fi) von Slave-Einheiten (SE1, ..., SEi) in einem jeweiligen Betriebsbereich (A1, ..., Ai) einer Anlage (A) umfassend eine Anzahl i an benachbarten Betriebsbereichen (A1, ..., Ai) jeweils aufweisend eine Slave-Einheit (SE1, ..., SEi), wobei die einzelnen Slave-Einheiten (SE1, ..., SEi) eine veränderbare Betriebsfunktion zum Erzielen oder Verändern eines physikalischen Zustands in dem betreffenden Betriebsbereich (A1, ..., Ai) der Anlage (A) aufweisen und wobei im betreffenden Betriebsbereich (A1, ..., Ai) jeweils ein Sensor (S1, ..., Si) vorgesehen ist, um eine dem physikalischen Zustand in dem betreffenden Betriebsbereich (A1, ..., Ai) proportionale Messgröße (T) zu erfassen und eine Auswerteeinrichtung vorgesehen ist, um eine Netzwerkadresse (Ni) einer Slave-Einheit (SE1, ..., SEi) mittels eines Autoadressierungsverfahrens zu vergeben oder zu ermitteln, beim Aktivieren oder Verändern der Betriebsfunktion wenigstens einer Slave-Einheit (SE1, ..., SEi) aus der zeitlichen Änderung der Messgrößen (T) den Einbauort (F1, ..., Fi) in dem Betriebsbereich (A1, ..., Ai) der entsprechenden Slave-Einheit zu ermitteln und zu der Netzwerkadresse (Ni) der entsprechenden Slave-Einheit den Einbauort (F1, ..., Fi) in dem Betriebsbereich (A1, ..., Ai) mit der größten gemessenen Änderung der Messgröße (T) zuzuordnen.

## Claims

1. A method for sensing a respective position of the installation location (F1, ..., Fi) of slave units (SE1, ..., SEi) in a respective operating region (A1, ..., Ai) of a system (A), comprising a number i of adjacent operating regions (A1, ..., Ai) each having a slave unit (SE1, ..., SEi), wherein each operating region (A1, ..., Ai) during operation of the installation (A) should have a respective predetermined physical state, for the purpose of which the individual slave units (SE1, ..., SEi) have an operating function for achieving or changing the physical state in the operating region (A1, ..., Ai) in question of the system (A), and wherein a respective sensor (S1, ..., Si), in order to sense a measurement variable (T) proportional to the physical state, and an evaluation device is provided in the operating region (A1, ..., Ai) in question , having the following steps:
a. allocation or determining of a network address (Ni) of a slave unit (SE1, ..., SEi) by means of an auto-addressing method by means of the evaluation device;
b. activating or changing of the operating function of this respective slave unit in order to reach or change the physical state in the operating region (A1, ..., Ai) in question;
c. sensing of a detectable state change in the operating units (A1, ..., Ai) by measuring the respective measurement variables (T) as a function of time by means of the sensors (S1, ..., Si);
d. associating of the installation location (F1, ..., Fi) in the operating region (A1, ..., Ai) with the greatest measured change of the measurement variable (T) with the network address (Ni) of the respective slave unit by means of the evaluation device.

2. The method according to Claim 1, **characterized in that** steps a) to d) are repeated successively, until all the installation locations (F1, ..., Fi) and thus operating regions (A1, ..., Ai) of the slave units (SE1, ..., SEi) are associated with the respective network addresses (Ni) of these slave units (SE1, ..., SEi).

3. The method according to Claim 2, **characterized in that**, with each successive allocation of the network addresses (Ni), the network address allocation of the respective next slave unit (SE1, ..., SEi) is increased in each case by the factor "1," preferably starting at N1=1 to Ni=i.

4. The method according to any one of Claims 1 to 3, **characterized in that** the slave units (SE1, ..., SEi) are fans, preferably fans with adjustable rotational speed.

5. The method according to any one of Claims 1 to 4, **characterized in that**, before step b), first all the slave units (SE1, ..., SEi) are activated in order to achieve a determined physical state in the operating regions (A1, ..., Ai) of the system (A), in particular a state in a thermodynamic equilibrium.

6. The method according to Claim 5, **characterized in that**, after reaching a determined state or the thermodynamic equilibrium, the respective measurement variables (T) sensed by the sensors (S1, ..., Si) are stored in a memory.

7. The method according to Claim 5 or 6, **characterized in that**, before step b), after reaching a determined state or the thermodynamic equilibrium in the operating regions (A1, ..., Ai) of the system (A), the operating function of the slave unit the installation location of which is to be determined is deactivated again or changed.

8. The method according to Claim 5 or 6, **characterized in that**, before step b), after reaching a determined state or the thermodynamic equilibrium in the operating regions (A1, ..., Ai) of the system (A), all the slave units (SE1, ..., SEi), except for the slave unit the installation location of which is to be determined, are deactivated again.

9. The method according to any one of Claims 1 to 8, **characterized in that** the measurement variable (T) for sensing the physical state, in particular the thermal state in the operating region (A1, ..., Ai) in question of the system, is the temperature.

10. The method according to any one of the preceding claims, **characterized in that** an identification of each slave unit (SE1, ..., SEi) occurs via a data assignment table containing the individual serial number of each slave unit (SE1, ..., SEi) and the network address (Ai) assigned to this serial number.

11. A position-sensing device for sensing a respective installation location (F1, ..., Fi) of slave units (SE1, ..., SEi) in a respective operating region (A1, ..., Ai) of a system (A), comprising a number i of adjacent operating regions (A1, ..., Ai) each comprising a slave unit (SE1, ..., SEi), wherein the individual slave units (SE1, ..., SEi) have a changeable operating function for achieving or changing a physical state in the operating region (A1, ..., Ai) in question of the system (A), and wherein, in the operating region (A1, ..., Ai) in question, a respective sensor (S1, ..., Si) is provided in order to sense the measurement variable (T) proportional to the physical state in the operating region (A1, ..., Ai) in question, and an evaluation device is provided in order to allocate or determine a network address (Ni) of a slave unit (SE1, ..., SEi) by means of an auto-addressing method, to determine, upon the activation or changing of the operating function of at least one slave unit (SE1,..., SEi), the installation location (F1,....., Fi) in the operating region (A1, ..., Ai) of the respective slave unit from the change in the measurement variables (T) over time and to associate the installation location (F1, ..., Fi) in the operating region (A1, ..., Ai) with the greatest measured change of the measurement variable (T) with the network address (Ni) of the respective slave unit.

## Revendications

1. Procédé de détection de position d'un emplacement d'installation respectif (F1, ..., Fi) d'unités esclaves (SE1, ..., SEi) dans une zone de fonctionnement respective (A1, ..., Ai) d'une installation (A) comprenant un nombre i de zones de fonctionnement adjacentes (A1, ..., Ai) présentant chacune une unité esclave (SE1, ..., SEi), dans lequel chaque zone de fonctionnement (A1, Ai) doit présenter respectivement un état physique prédéterminé pendant le fonctionnement de l'installation (A), les unités esclaves individuelles (SE1, ..., SEi) présentant à cette fin une fonction opérationnelle pour atteindre ou modifier l'état physique dans la zone de fonctionnement pertinente (A1, ..., Ai) de l'installation (A) et dans lequel, dans la zone de fonctionnement pertinente (A1, ..., Ai), sont prévus respectivement un capteur (S1, ..., Si), pour détecter une grandeur de mesure (T) proportionnelle à l'état physique, et un dispositif d'évaluation, le procédé comprenant les étapes suivantes :
a. attribution ou détermination d'une adresse réseau (Ni) d'une unité esclave (SE1, ..., SEi) au moyen d'un procédé d'autoadressage par le dispositif d'évaluation ;
b. activation ou modification de la fonction opérationnelle de chacune de ces unités esclaves pour atteindre ou modifier l'état physique dans la zone de fonctionnement pertinente (A1, ..., Ai) ;
c. détection d'un changement d'état détectable dans les zones de fonctionnement (A1, ..., Ai) en mesurant les grandeurs mesurées respectives (T) en fonction du temps au moyen des capteurs (S1, ..., Si) ;
d. affectation de l'emplacement d'installation (F1, ..., Fi) dans la zone de fonctionnement (A1, Ai) présentant la plus grande variation mesurée de la grandeur de mesure (T) à l'adresse réseau (Ni) de l'unité esclave correspondante au moyen du dispositif d'évaluation.

2. Procédé selon la revendication 1, **caractérisé en ce que** les étapes a) à d) sont répétées successivement jusqu'à ce que tous les emplacements d'installation (F1, ..., Fi) et donc les zones de fonctionnement (A1, ..., Ai) des unités esclaves (SE1, ..., SEi) soient affectés aux adresses réseau respectives (Ni) de ces unités esclaves (SE1, ..., SEi).

3. Procédé selon la revendication 2, **caractérisé en ce que** lors de l'attribution successive des adresses réseau (Ni), l'attribution de l'adresse réseau de l'unité esclave suivante respective (SE1, ..., SEi) est respectivement augmentée d'un facteur « 1 », en commençant de préférence par N1=1 et en allant jusqu'à Ni=i.

4. Procédé selon l'une des revendications 1 à 3, **caractérisé en ce que** les unités esclaves (SE1, ..., SEi) sont des ventilateurs, de préférence des ventilateurs à vitesse réglable.

5. Procédé selon l'une des revendications 1 à 4, **caractérisé en ce qu'**avant l'étape b) toutes les unités esclaves (SE1, ..., SEi) sont d'abord activées afin d'atteindre un état physique déterminé dans les zones de fonctionnement (A1, ..., Ai) de l'installation (A), en particulier un état d'équilibre thermodynamique.

6. Procédé selon la revendication 5, **caractérisé en ce qu'**après avoir atteint un état déterminé ou l'équilibre thermodynamique, les grandeurs de mesure respectives (T) détectées par les capteurs (S1, ..., Si) sont stockées dans une mémoire.

7. Procédé selon la revendication 5 ou 6, **caractérisé en ce qu'**avant l'étape b) après avoir atteint un état déterminé ou l'équilibre thermodynamique dans les zones de fonctionnement (A1, ..., Ai) de l'installation (A), la fonction opérationnelle de l'unité esclave dont on souhaite déterminer l'emplacement d'installation, est à nouveau désactivée ou modifiée.

8. Procédé selon la revendication 5 ou 6, **caractérisé en ce qu'**avant l'étape b) après avoir atteint un état déterminé ou l'équilibre thermodynamique dans les zones de fonctionnement (A1, ..., Ai) de l'installation (A), toutes les unités esclaves (SE1, ..., SEi) sont à nouveau désactivées, hormis l'unité esclave dont on souhaite déterminer l'emplacement d'installation.

9. Procédé selon l'une des revendications 1 à 8, **caractérisé en ce que** la grandeur de mesure (T) pour détecter l'état physique, en particulier thermique, dans la zone de fonctionnement pertinente (A1, ..., Ai) de l'installation est la température.

10. Procédé selon l'une des revendications précédentes, **caractérisé en ce que** chaque unité esclave (SE1, ..., SEi) est identifiée par le biais d'une table d'affectation des données contenant le numéro de série individuel de chaque unité esclave (SE1, ..., SEi) et l'adresse réseau (Ai) attribuée à ce numéro de série.

11. Dispositif de détection de position pour détecter un emplacement d'installation respectif (F1, ..., Fi) d'unités esclaves (SE1, ..., SEi) dans une zone de fonctionnement respective (A1, ..., Ai) d'une installation (A) comprenant un nombre i de zones de fonctionnement adjacentes (A1, ..., Ai) présentant chacune une unité esclave (SE1, ..., SEi), dans lequel les unités esclaves individuelles (SE1, ..., SEi) présentent une fonction opérationnelle modifiable pour atteindre ou modifier un état physique dans la zone de fonctionnement pertinente (A1, ..., Ai) de l'installation (A) et dans lequel, dans la zone de fonctionnement pertinente (A1, ..., Ai), un capteur (S1, ..., Si) est prévu pour détecter une grandeur de mesure (T) proportionnelle à l'état physique dans la zone de fonctionnement pertinente (A1, ..., Ai) et un dispositif d'évaluation est prévu pour attribuer une adresse réseau (Ni) à une unité esclave (SE1, ..., SEi) ou pour déterminer cette adresse, au moyen d'un procédé d'autoadressage, pour déterminer, lors de l'activation ou de la modification de la fonction opérationnelle d'au moins une unité esclave (SE1, ..., SEi) à partir de la variation des grandeurs de mesure (T) dans le temps, l'emplacement d'installation (F1, ..., Fi) dans la zone de fonctionnement (A1, ..., Ai) de l'unité esclave correspondante, et pour attribuer l'emplacement d'installation (F1, ..., Fi) dans la zone de fonctionnement (A1, ..., Ai) présentant la plus grande variation mesurée de la grandeur de mesure (T) à l'adresse réseau (Ni) de l'unité esclave correspondante.
